(19) **Europäisches Patentamt / European Patent Office / Office européen des brevets**

(11) **EP 4 474 250 B1**

(12) **EUROPEAN PATENT SPECIFICATION**

(45) Date of publication and mention
of the grant of the patent:
**24.09.2025   Bulletin 2025/39**

(21) Application number: **24735460.8**

(22) Date of filing: **12.01.2024**

(51) International Patent Classification (IPC):
**B62D 6/00** *(2006.01)*      **B62D 5/04** *(2006.01)*
**B62D 15/02** *(2006.01)*

(52) Cooperative Patent Classification (CPC):
**B62D 15/025**

(86) International application number:
**PCT/JP2024/000659**

(87) International publication number:
**WO 2024/224704 (31.10.2024 Gazette 2024/44)**

(54) **CONTROL DEVICE FOR ELECTRIC POWER STEERING DEVICE AND ELECTRIC POWER STEERING DEVICE**

STEUERUNGSVORRICHTUNG FÜR EINE ELEKTRISCHE SERVOLENKVORRICHTUNG UND ELEKTRISCHE SERVOLENKVORRICHTUNG

DISPOSITIF DE COMMANDE POUR UN DISPOSITIF DE SERVODIRECTION ÉLECTRIQUE ET DISPOSITIF DE SERVODIRECTION ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.04.2023   JP 2023074963**
**28.04.2023   JP 2023074964**

(43) Date of publication of application:
**11.12.2024   Bulletin 2024/50**

(73) Proprietor: **NSK Steering & Control, Inc.**
**Tokyo, 141-0032 (JP)**

(72) Inventor: **ISHIDA Tadashi**
**Maebashi-shi, Gunma 3718527 (JP)**

(74) Representative: **Rings, Rolf**
**Klingseisen, Rings & Partner**
**Patentanwälte**
**Postfach 10 15 61**
**80089 München (DE)**

(56) References cited:
**EP-B1- 3 744 611        WO-A1-2019/087864**
**JP-A- 2003 285 753      JP-A- 2020 019 346**
**JP-A- 2021 138 334      JP-A- 2023 048 867**
**US-A1- 2017 144 705    US-A1- 2018 170 424**
**US-A1- 2023 034 588**

## Description

Technical Field

The present invention relates to a control device for electric power steering device and an electric power steering device.

Background Art

PTL 1 discloses an automatic steering device including a movement trajectory setting means for setting a movement trajectory of a vehicle up to a target position, a steering actuator control means for calculating a first drive instruction value to be input to a steering actuator based on the movement trajectory and a second drive instruction value to be input to the steering actuator based on a steering force applied by a driver to the steering wheel.

Citation List

Patent Literature

PTL 1: JP 2008-068677 A

EP 3 744 611 B1 may be seen as the closest prior art and discloses an electric power steering system, wherein a torque sensor detects torsion bar torque applied to a torsion bar. The system comprises an upper-level electronic control unit (ECU) that performs drive assist control and automatic drive control. The upper-level ECU sets a target automatic steering angle for automatic steering wherein automatic steering control is a control for causing the vehicle to travel along a target track. The target automatic steering angle, which is set by the upper-level ECU, is provided to a motor control ECU via an in-vehicle network. The torsion bar torque, which is detected by the torque sensor, and an output signal from a rotational angle sensor are input to the motor control ECU. The motor control ECU controls the electric motor based on input signals and information provided from the upper-level ECU. A compensation value computation unit is composed of a disturbance torque estimation unit and a subtraction unit and estimates the disturbance torque based on the target automatic output shaft torque, which is computed by a speed reduction ratio multiplication unit, and the actual steering angle, which is computed by a second speed reduction ratio division unit. The compensation value is computed by subtracting the torsion bar torque from the estimated disturbance torque value. The disturbance torque estimation unit is constituted of a disturbance observer that computes the estimated disturbance torque value, an estimated actual steering angle value, and an estimated angular speed value using a physical model of the electric power steering system.
In this system, the disturbance torque is indicated as the sum of the torsion bar torque, the road surface load torque, and the friction torque.

Summary of Invention

Technical Problem

In a mode where steering assist control that detects a steering torque that is input to a steering mechanism and generates a steering assist torque and steering angle control that causes the actual steering angle to follow a target steering angle operate simultaneously, it is desirable to balance between the steering assist control and the steering angle control, so that a subtle steering feel when a driver steers and good steering angle tracking performance are both achieved.

An objective of the present invention is to achieve both the subtle steering feel when a driver steers and good steering angle tracking performance in a mode where the steering assist control and the steering angle control that causes the actual steering angle follow a target steering angle operate simultaneously.

Solution to Problem

In order to achieve the above-described object, according to an aspect of the present invention, there is provided a control device for an electric power steering device including: a steering torque detection unit configured to detect a steering torque that is input to a steering mechanism; a first steering control value calculation unit configured to calculate a first steering control value based on the steering torque detected by the steering torque detection unit; a second steering control value calculation unit configured to calculate a second steering control value for causing an actual steering angle to follow a target steering angle; a mixing unit configured to calculate a target steering control value by adding the first steering control value and the second steering control value; and a drive unit configured to drive a motor generating a steering force based on the target steering control value.

The second steering control value calculation unit includes a disturbance compensation torque setting unit configured to set a disturbance compensation torque, and calculates the second steering control value based on an angular deviation of the actual steering angle relative to the target steering angle and the disturbance compensation torque, and the disturbance compensation torque setting unit sets the disturbance compensation torque including a larger friction component when the steering torque is larger than when the steering torque is smaller.

According to another aspect of the present invention, there is provided an electric power steering device including the control device described above, wherein the electric power steering device controls, by the control device, steering force generated by the motor. The present invention is defined by the features of the independent claims 1 and 5.

Advantageous Effects of Invention

According to the present invention, it is possible to achieve both the subtle steering feel when a driver steers and good steering angle tracking performance in a mode where the steering assist control and the steering angle control that causes the actual steering angle follow a target steering angle operate simultaneously.

Brief Description of Drawings

FIG. 1 is a configuration diagram illustrating an overview of an example of an electric power steering device of an embodiment;

FIG. 2 is a block diagram illustrating an example of the functional configuration of a controller 30;

FIG. 3 is a block diagram illustrating an example of the functional configuration of a manual assist control unit 40;

FIG. 4 is a block diagram illustrating an example of the functional configuration of a steering angle feedback control unit 41;

FIG. 5 is a block diagram illustrating an example of the functional configuration of a disturbance compensation torque setting unit 42;

FIG. 6 is a block diagram illustrating an example of the functional configuration of an input torque calculation unit 42b;

FIG. 7 is a schematic diagram of an example of the characteristic of a hysteresis width Wh set by a hysteresis width setting unit 61;

FIG. 8 is a block diagram illustrating an example of the functional configuration of a friction torque estimation unit 42d;

FIG. 9 is a schematic diagram of an example of the characteristic of an assist torque Ta set by an assist torque setting unit 70;

FIG. 10 is a schematic diagram of an example of the characteristic of a dynamic friction coefficient Cd set by a dynamic friction coefficient setting unit 73a;

FIG. 11 is a block diagram illustrating an example of the functional configuration of a friction gain calculation unit 75;

FIG. 12A is a schematic diagram of an example of the characteristic of a first direction gain Gcw set by a first direction gain setting unit 75a, and FIG 12B is a schematic diagram of an example of the characteristic of a second direction gain Gccw set by a second direction gain setting unit 75b;

FIG. 13 is a schematic diagram of an example of the characteristic of a torque-sensitive gain G4 set by a torque-sensitive gain setting unit 85; and

FIG. 14 is a flowchart of an example of control method for an electric power steering device of the embodiment.

Description of Embodiments

Embodiments of the present invention will be described in detail with reference to the drawings. Note that the embodiments of the present invention to be described below indicate devices and methods to embody the technical idea of the present invention by way of example, and the technical idea of the present invention does not limit the constitution, arrangements, and the like of the constituent components to those described below. The technical idea of the present invention can be subjected to a variety of alterations within the technical scope prescribed by the claims described in CLAIMS.

(Configuration)

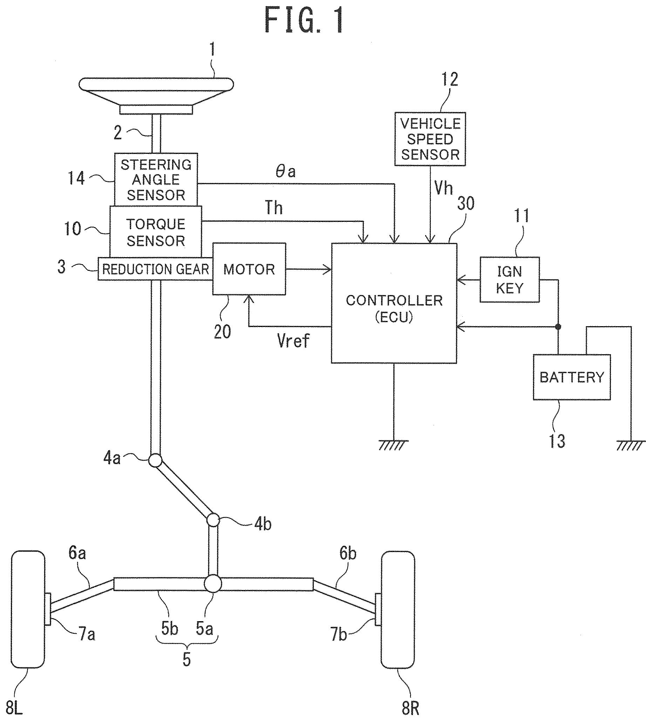

FIG. 1 is a configuration diagram illustrating an overview of an example of the electric power steering device of an embodiment. A steering shaft (handle shaft) 2 of a steering wheel (steering handle) 1 is coupled to the steered wheels 8L and 8R via a reduction gear (worm gear) 3 that constitutes a reduction mechanism, universal joints 4a and 4b, a pinion rack mechanism 5, and tie rods 6a and 6b, and further via hub units 7a and 7b.

The pinion rack mechanism 5 has a pinion 5a connected to a pinion shaft to which the steering force is transmitted from the universal joint 4b, and a rack 5b that meshes with the pinion 5a, thereby converting a rotational motion transmitted to the pinion 5a into a linear motion in the vehicle width direction with the rack 5b.

The steering shaft 2 is provided with a torque sensor 10 that detects a steering torque Th. The steering shaft 2 is also provided with a steering angle sensor 14 that detects the steering angle $\theta a$ of the steering mechanism. For example, the steering angle sensor 14 may detect the steering angle $\theta a$ of the steering wheel 1 and/or the steering shaft 2. In the following description, the steering angle $\theta a$ detected by the steering angle sensor 14 may be referred to as the "actual steering angle $\theta a$."

A motor 20 that assists the steering force of the steering wheel 1 is connected to the steering shaft 2 via the reduction gear 3. A controller 30 that controls the electric power steering (EPS) device is supplied with electric power from a battery 13 and input with an ignition key signal through an ignition (IGN) key 11.

Note that the means for providing a steering assist force is not limited to a motor, but various types of actuators can be used.

The controller 30 is an electronic control unit (ECU) that controls the electric current supplied to the motor 20 using a voltage control command value Vref obtained by calculating the current command value of the assist control command based on the steering torque Th detected by the torque sensor 10, the vehicle speed Vh detected by the vehicle speed sensor 12, and the actual steering angle $\theta a$ detected by the steering angle sensor 14 and compensating for the current command value.

Note that the steering angle sensor 14 is not essential, and the actual steering angle $\theta a$ may be calculated by adding the torsion angle of the torsion bar of the torque sensor 10 to the rotation angle obtained from the rotation angle sensor that detects the rotation angle of the rotation shaft of the motor 20.

Alternatively, the turning angle of the steered wheels 8L and 8R may be used as the actual steering angle $\theta a$. For example, the turning angle may be detected by detecting the displacement of the rack 5b.

The controller 30 may include a computer that includes, for example, a processor and peripheral components such as a storage device. The processor may be, for example, a central processing unit (CPU) or a micro-processing unit (MPU).

The storage device may include any of semiconductor, magnetic, and optical storage devices. The storage device may include a register, a cache memory, and a memory such as read only memory (ROM) and random access memory (RAM) used as a main memory.

The functions of the controller 30 described below are realized, for example, by the processor of the controller 30 executing a computer program stored in the storage device.

Note that the controller 30 may be formed by dedicated hardware to perform each of the information processing described below. For example, the controller 30 may include a functional logic circuit that is configured in a general-purpose semiconductor integrated circuit. For example, the controller 30 may have a programmable logic device (PLD) such as a field-programmable gate array (FPGA).

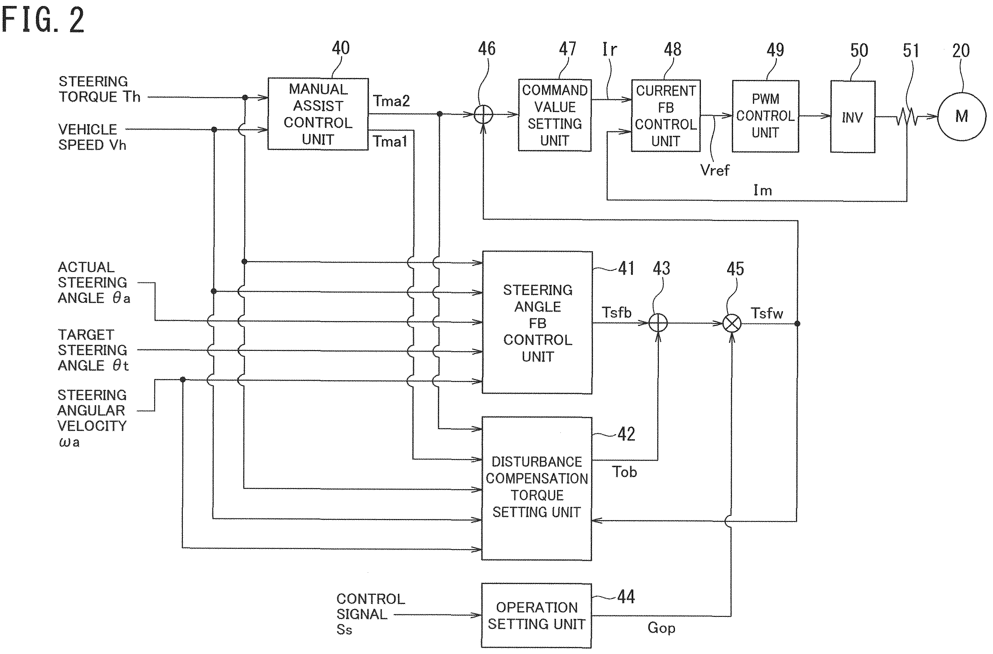

FIG. 2 is a block diagram illustrating an example of the functional configuration of the controller 30. The controller 30 includes a manual assist control unit 40, a steering angle feedback (FB) control unit 41, a disturbance compensation torque setting unit 42, adders 43 and 46, an operation setting unit 44, a multiplier 45, a command value setting unit 47, a current feedback (FB) control unit 48, a pulse width modulation (PWM) control unit 49, an inverter (INV) 50, and a current detection unit 51. In the following description, steering angle feedback may be referred to as "steering angle FB" and current feedback may be referred to as "current FB."

The manual assist control unit 40 calculates a first manual assist torque Tma1 and a second manual assist torque Tma2 based at least on the steering torque Th and the vehicle speed Vh. The second manual assist torque Tma2 includes the entire component of the steering assist torque that assists the steering of the steering mechanism by a driver, and the first manual assist torque Tma1 includes only the static component of the second manual assist torque Tma2. The second manual assist torque Tma2 is an example of the "first steering control value" described in the claims. The first manual assist torque Tma1 is an example of the static component of the first steering control value. Details of the manual assist control unit 40 are described below.

The steering angle FB control unit 41 calculates a steering angle FB torque Tsfb to cause the actual steering angle $\theta a$ to follow the target steering angle $\theta t$ based at least on the steering torque Th, the vehicle speed Vh, the actual steering angle $\theta a$, the steering angular velocity $\omega a$ that is the time rate of change of the actual steering angle $\theta a$, and the target steering angle $\theta t$. In the present embodiment, the sign of the steering angular velocity $\omega a$ when the steering mechanism (for example, the steering wheel 1 and the steering shaft 2) rotates clockwise is defined as positive, and the sign of the steering angular velocity $\omega a$ when the steering mechanism rotates counterclockwise is defined as negative. In the following description, the steering angular velocity $\omega a$ may be referred to as the actual steering angular velocity $\omega a$.

The target steering angle $\theta t$ is the target value of the actual steering angle $\theta a$ that is automatically set in the automatic steering control by the controller **30**. For example, the controller 30 may set a target travel trajectory on which the vehicle should travel and set the target steering angle $\theta t$ so that the vehicle travels along the target travel trajectory. For example, the controller 30 may also set the target steering angle $\theta t$ based on the lateral position in a lane and the deviation margin time to the lane boundary line so that the vehicle travels within the same lane. For example, the controller 30 may receive the target steering angle $\theta t$ from a high-level controller controlling the vehicle via CAN communication or other means. Details of the steering angle FB control unit 41 are described below.

The disturbance compensation torque setting unit 42 uses a disturbance observer to set a disturbance compensation torque Tob to compensate for disturbances applied to the steering mechanism. The disturbance compensation torque setting unit 42 calculates the disturbance compensation torque Tob based at least on the first manual assist torque Tma1, the second manual assist torque Tma2, the steering torque Th, the vehicle speed Vh, the actual steering angular velocity $\omega a$, and the past value (previous value) of the steering angle tracking torque Tsfw obtained by correcting the steering angle FB torque Tsfb by the disturbance compensation torque Tob. Details of the disturbance compensation torque setting unit 42 are described below.

The operation setting unit 44 sets an operation gain Gop based on a control signal Ss to set whether the automatic steering control is enabled or not. For example, the control signal Ss is set based on the switch on/off of the automatic steering control by an occupant or the reliability of the sensor used for automatic steering control (for example, a camera for detecting a lane) with regard to the malfunction. The operation gain Gop is set to the value "1" when the automatic steering control is enabled, and is set to the value "0" when the automatic steering control is disabled.

The adder 43 compensates for disturbances applied to the steering mechanism by adding the disturbance compensation torque Tob to the steering angle FB torque Tsfb. The multiplier 45 multiplies the sum of the steering angle FB torque Tsfb and the disturbance compensation torque Tob by the operation gain Gop to calculate a steering angle tracking torque $Tsfw = Gop \times (Tsfb + Tob)$. The steering angle tracking torque Tsfw is an example of the "second steering control value" as described in the claims.

The adder 46 calculates a target steering torque (Tma2 + Tsfw) by adding the second manual assist torque Tma2 and the steering angle tracking torque Tsfw. The adder 46 is an example of the "mixing unit" as described in the claims, and the target steering torque (Tma2 + Tsfw) is an example of the "target steering control value" as described in the claims.

The command value setting unit 47 converts the target steering torque (Tma2 + Tsfw) into a current command value Ir0 and sets a target current command value Ir by limiting the upper limit of the current command value Ir0.

The current FB control unit 48 generates a voltage control command value Vref by feedback control such as proportional-integral (PI) control based on the deviation between the feedbacked current value Im of the motor 20 and the target current command value Ir. The current value Im of the motor 20 is detected by the current detection unit 51. The voltage control command value Vref is input to the PWM control unit 49, and the inverter 50 is controlled by a PWM signal generated by the PWM control unit 49 to drive the motor 20. The inverter 50 is an example of the "drive unit" as described in the claims.

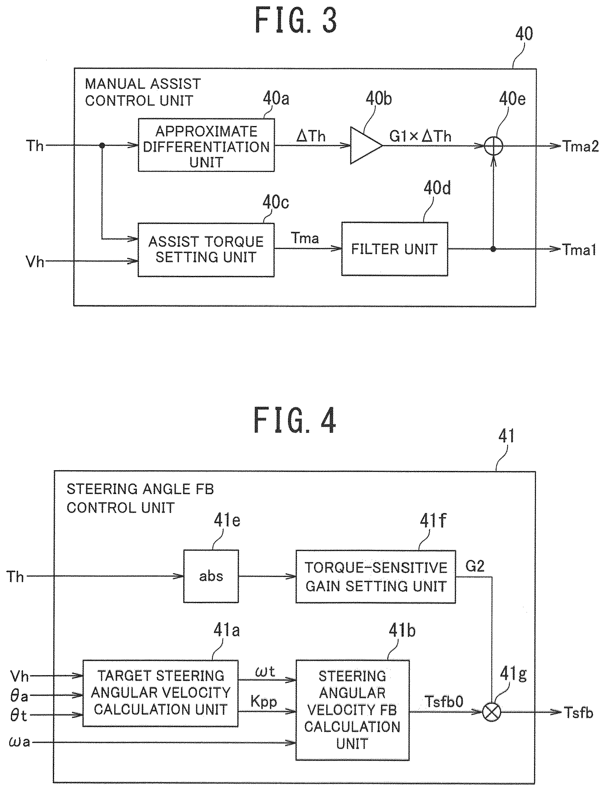

The following describes the details of the manual assist control unit 40. FIG. 3 is a block diagram illustrating an example of the functional configuration of the manual assist control unit 40. The manual assist control unit 40 includes an approximate differentiation unit 40a, a gain multiplication unit 40b, an assist torque setting unit 40c, a filter unit 40d, and an adder 40e.

The approximate differentiation unit 40a calculates a variation component $\Delta Th$ of the steering torque Th. For example, the approximate differentiation unit 40a may calculate a variation component $\Delta Th$ by multiplying the transfer function s/(Ts+1) that is a combination of differential operation and low-pass filter by the steering torque Th. Alternatively, the approximate differentiation unit 40a simply calculates a variation component $\Delta Th$ by differentiating the steering torque Th.

The gain multiplication unit 40b calculates the product, $G1 \times \Delta Th$, of the variation component $\Delta Th$ and a predetermined gain G1.

The assist torque setting unit 40c sets an assist torque Tma that is a steering assist torque based at least on the steering torque Th and the vehicle speed Vh. The assist torque setting unit 40c may set a larger assist torque Tma for a larger steering torque Th. The assist torque setting unit 40c may set a larger assist torque Tma for a lower vehicle speed Vh. For example, the assist torque setting unit 40c may set an assist torque Tma using an assist map or the like.

The filter unit 40d calculates a first manual assist torque Tma1 that includes only the static component of the assist torque Tma by removing a resonance component and the like from the assist torque Tma corresponding to the steering torque Th. For example, the filter unit 40d may be a notch filter, a low-pass filter, and/or the like.

The adder 40e calculates a second manual assist torque Tma2 that includes the entire component of the steering assist torque by adding the output of the gain multiplication unit 40b $G1 \times \Delta Th$ to the first manual assist torque Tma1. In other words, the second manual assist torque Tma2 includes the static component of the assist torque Tma that is the steering assist torque corresponding to the steering torque Th and the variation component $\Delta Th$ of the steering torque Th. By applying the steering assist torque that includes the variation component $\Delta Th$ of the steering torque Th to the steering mechanism, the fluctuation of the steering torque Th can be suppressed.

The following describes the details of the steering angle FB control unit 41. FIG. 4 is a block diagram illustrating an example of the functional configuration of the steering angle FB control unit 41. The steering angle FB control unit 41 includes a target steering angular velocity calculation unit 41a, a steering angular velocity feedback (FB) calculation unit 41b, an absolute value calculation unit (abs) 41e, a torque-sensitive gain setting unit 41f, and a multiplier 41g. Note that, in the following description, the steering angular velocity feedback may be referred to as "steering angular velocity FB."

The target steering angular velocity calculation unit 41a calculates a target steering angular velocity $\omega t$ based on the angular deviation of the actual steering angle $\theta a$ relative to the target steering angle $\theta t$ and the vehicle speed Vh. For example, the target steering angular velocity calculation unit 41a sets a conversion factor Kpp corresponding to the vehicle speed Vh. For example, the target steering angular velocity calculation unit 41a may set a smaller conversion factor Kpp for a higher vehicle speed Vh. The target steering angular velocity calculation unit 41a calculates the product Kpp $\times$ ($\theta t$ - $\theta a$) of the angular deviation ($\theta t$ - $\theta a$) of the actual steering angle $\theta a$ relative to the target steering angle $\theta t$ and the conversion coefficient Kpp, as the target steering angular velocity $\omega t$.

Next, the steering angular velocity FB calculation unit 41b sets a conversion factor Kpv based on the conversion factor Kpp. For example, the conversion factor Kpv may be set to maintain a constant value when the conversion factor Kpp is in the range lower than a threshold value, and to increase as the conversion factor Kpp increases when the conversion factor Kpp is in the range equal to or more than the threshold value. The steering angular velocity FB calculation unit 41b calculates the product Kpv $\times$ ($\omega t$ - $\omega a$) of the angular velocity deviation ($\omega t$ - $\omega a$) of the actual steering angular velocity $\omega a$ relative to the target steering angular velocity $\omega t$ and the conversion factor Kpv, as the basic steering angle FB torque Tsfb0.

The absolute value calculation unit 41e outputs the absolute value of the steering torque Th.

The torque-sensitive gain setting unit 41f sets a torque-sensitive gain G2 according to the output of the absolute value calculation unit 41e. For example, a smaller torque-sensitive gain G2 may be set when the output of the absolute value calculation unit 41e is larger than when the output of the absolute value calculation unit 41e is smaller.

The multiplier 41g calculates a steering angle FB torque Tsfb = G2 $\times$ Tsfb0 by multiplying the basic steering angle FB torque Tsfb0 by the torque-sensitive gain G2.

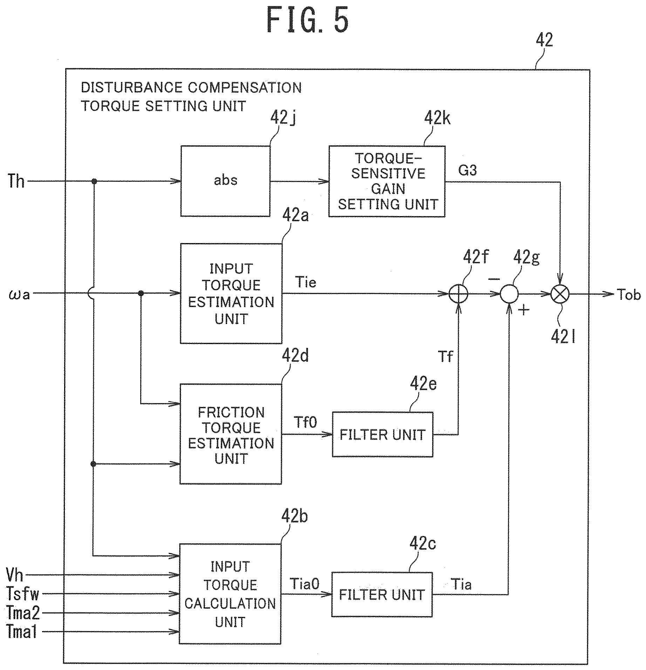

The following describes the details of the disturbance compensation torque setting unit 42. FIG. 5 is a block diagram illustrating an example of the functional configuration of the disturbance compensation torque setting unit 42. The disturbance compensation torque setting unit 42 includes an input torque estimation unit 42a, an input torque calculation unit 42b, filter units 42c and 42e, a friction torque estimation unit 42d, an adder 42f, a subtractor 42g, an absolute value calculation unit (abs) 42j, a torque-sensitive gain setting unit 42k, and a multiplier 42l.

The input torque estimation unit 42a calculates an estimated input torque Tie that is an estimate value of the input torque to the steering mechanism by inputting the actual steering angular velocity $\omega a$ to the inverse model of the steering mechanism. For example, the input torque estimation unit 42a may calculate the estimated input torque Tie based on the following equation (1):

$$\texttt{Tie = (J·s + D)}\omega\texttt{a·Q(s) ... (1)}$$

(J·s + D) is the transfer function of the inverse model of the steering mechanism, J is the moment of inertia, D is the viscosity coefficient, and Q(s) is the transfer function of the low pass filter.

Alternatively, the input torque estimation unit 42a may calculate an estimated input torque Tie by inputting angle information consisting of the actual steering angle $\theta a$, the actual steering angular velocity $\omega a$, and the actual steering angular acceleration $\alpha a$ that is the time rate of change of the actual steering angular velocity $\omega a$ into the inverse model. Various equations can be used depending on the combination of input angle information. The following equation (2) may be used instead of equation (1). The inertia and viscosity terms in equation (1) or equation (2) may be obtained from equation (3) or equation (4).

$$\texttt{Tie = (J·s + D)}\omega\texttt{a·Q(s) + K·}\theta\texttt{a·Q(s) ... (2)}$$

K is the stiffness and K·$\theta a$ is the reaction force from the road surface.

$$\texttt{J·s·}\omega\texttt{a = J·s\textasciicircum2·}\theta\texttt{a = J·}\alpha\texttt{a ... (3)}$$

$$\texttt{D·}\omega\texttt{a = D·s·}\theta\texttt{a ... (4)}$$

The input torque calculation unit 42b calculates an input torque Tia0 that is input to the steering mechanism based at least on the steering torque Th, the vehicle speed Vh, the past value (previous value) of the steering angle tracking torque Tsfw, the first manual assist torque Tma1, and the second manual assist torque Tma2. In the following description, the input torque Tia0 calculated by the input torque calculation unit 42b is referred to as the "basic actual input torque Tia0."

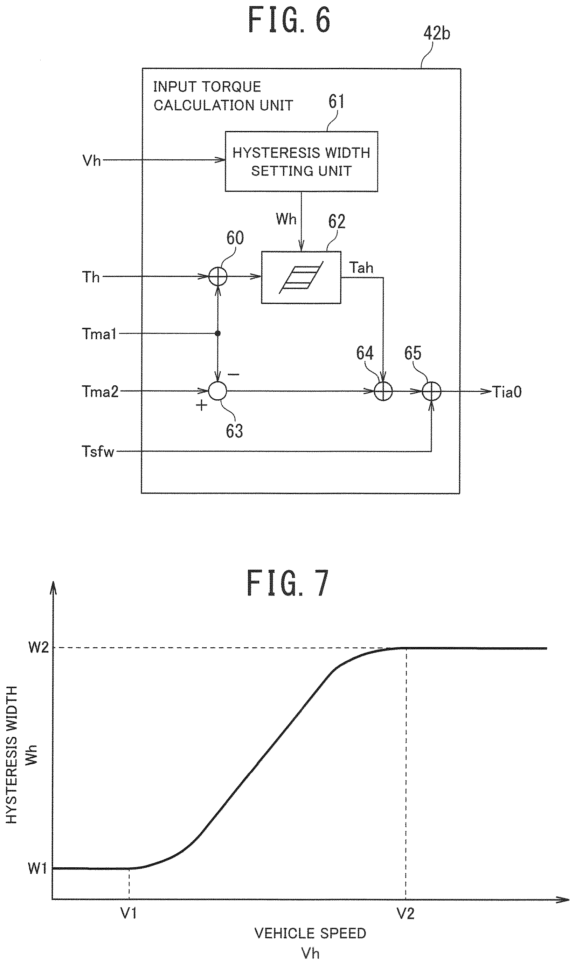

FIG. 6 is a block diagram illustrating an example of the functional configuration of the input torque calculation unit 42b. The input torque calculation unit 42b includes adders 60, 64, and 65, a hysteresis width setting unit 61, a hysteresis processing unit 62, and a subtractor 63.

The adder 60 calculates the sum (Tma1 + Th) of the first manual assist torque Tma1 and the steering torque Th, as the static manual steering input torque. The hysteresis width setting unit 61 sets the hysteresis width Wh of a hysteresis characteristic to be imparted to the static manual steering input torque (Tma1 + Th), the hysteresis width Wh corresponding to the vehicle speed Vh.

For example, the hysteresis width setting unit 61 may set a wider hysteresis width Wh when the vehicle speed Vh is higher than when the vehicle speed Vh is lower. For example, a wider the hysteresis width Wh may be set for a higher vehicle speed Vh.

FIG. 7 is a schematic diagram of an example of the characteristic of the hysteresis width Wh set by the hysteresis width setting unit 61. For example, the hysteresis width Wh may be set to be maintained at a relatively small (relatively narrow) constant value W1 when the vehicle speed Vh is in the range lower than a relatively low first threshold V1, a relatively high (relatively wide) constant value W2 when the vehicle speed Vh is in the range equal to or more than a relatively high second threshold V2, and to increase (expand) from the value W1 to the value W2 as the vehicle speed Vh increases in the range where the vehicle speed Vh is equal to or higher than the first threshold V1 and is lower than the second threshold V2.

Referring to FIG. 6, the hysteresis processing unit 62 generates an input torque Tah by applying a hysteresis characteristic of a hysteresis width Wh to the static manual steering input torque (Tma1 + Th). The input torque Tah is an example of the "first component" as described in the claims.

The subtractor 63 calculates the difference (Tma2 - Tma1) by subtracting the first manual assist torque Tma1 from the second manual assist torque Tma2. The adders 64 and 65 calculate a basic actual input torque Tia0 = Tah + (Tma2 - Tma1) + Tsfw by adding the difference (Tma2 - Tma1) and the past value of the steering angle tracking torque Tsfw to the input torque Tah. The sum of the difference (Tma2 - Tma1) and the steering angle tracking torque Tsfw is an example of the "second component" as described in the claims.

Referring to FIG. 5, the filter unit 42c calculates the actual input torque Tia by applying low-pass filter processing to the basic actual input torque Tia0. The low-pass filter of the filter unit 42c may be the same as the low-pass filter Q(s) of equation (1) used in the input torque estimation unit 42a.

The friction torque estimation unit 42d estimates a first friction torque Tf0 that is the friction torque acting on the steering mechanism based on the actual steering angular velocity $\omega a$ and the vehicle speed Vh.

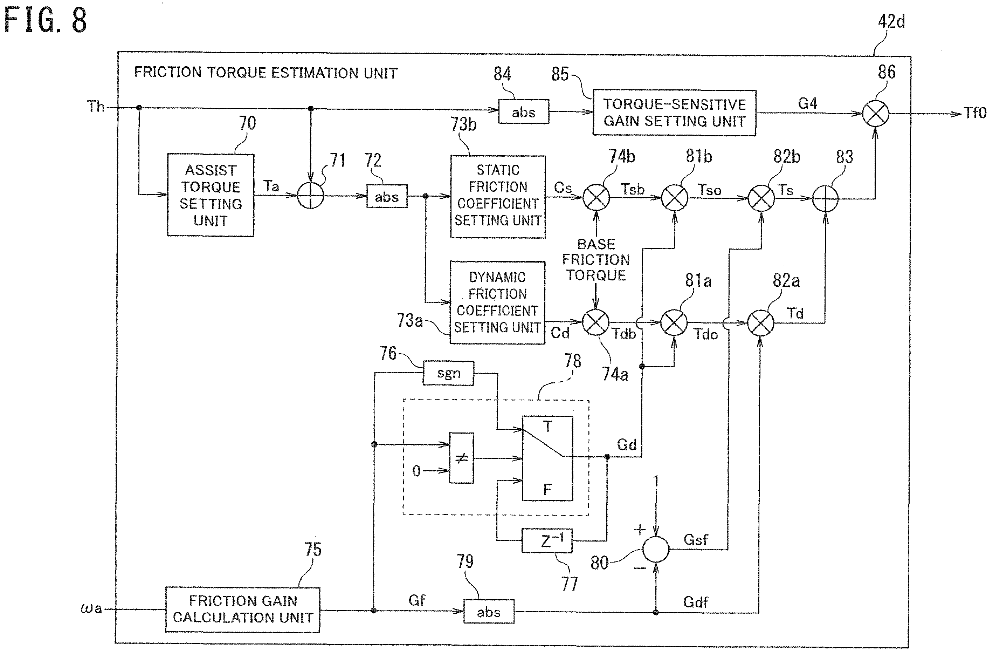

FIG. 8 is a block diagram illustrating an example of the functional configuration of the friction torque estimation unit 42d.

The friction torque estimation unit 42d includes an assist torque setting unit 70, adders 71 and 83, absolute value calculation units (abs) 72, 79 and 84, a dynamic friction coefficient setting unit 73a, a static friction coefficient setting unit 73b, multipliers 74a, 74b, 81a, 81b, 82a, 82b and 86, a friction gain calculation unit 75, a sign unit (sgn) 76, a delay unit 77, a selector 78, a subtractor 80, and a torque-sensitive gain setting unit 85.

The assist torque setting unit 70 sets an assist torque Ta that is a steering assist torque corresponding to the steering torque Th. For example, the assist torque setting unit 70 may set a larger assist torque Ta for a larger steering torque Th. For example, the assist torque setting unit 70 may set an assist torque Ta using an assist map or the like.

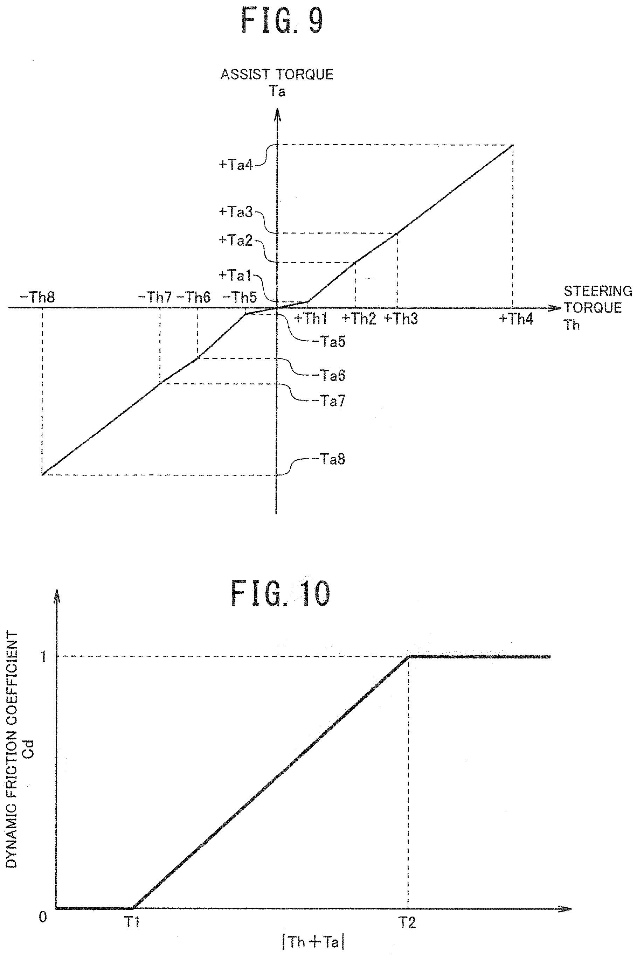

FIG. 9 is a schematic diagram of an example of the characteristic of the assist torque Ta set by the assist torque setting unit 70. The assist torque Ta increases from "0" to (+Ta1) when the steering torque Th is in the range from "0" to (+Th1), increases from the value (+Ta1) to (+Ta2) when the steering torque Th is in the range from (+Th1) to (+Th2), increases from the value (+ Ta2) to (+Ta3) when the steering torque Th is in the range from (+Th2) to (+Th3), and increases from the value (+Ta3) to (+Ta4) when the steering torque Th is in the range from (+Th3) to (+Th4).

Similarly, the assist torque Ta increases from the value (-Ta8) to (-Ta7) when the steering torque Th is in the range from (-Th8) to (-Th7), increases from the value (-Ta7) to (-Ta6) when the steering torque Th is in the range from (-Th7) to (-Th6), increases from the value (-Ta6) to (-Ta5) when the steering torque Th is in the range from (-Th6) to (-Th5), and increases from the value (-Ta5) to "0" when the steering torque Th is in the range from (-Th5) to "0".

When the rate of change (Ta1/Th1) which the change in the assist torque Ta relative to the change in the steering torque Th in the range of the steering torque Th from "0" to (+Th1) is defined as R1; the rate of change ((Ta2 - Ta1)/(Th2 - Th1)) in the range of the steering torque Th from (+Th1) to (+Th2) is defined as R2; the rate of change ((Ta3 - Ta2)/(Th3 - Th2)) in the range of the steering torque Th from (+Th2) to (+Th3) is defined as R3; and the rate of change ((Ta4 - Ta3)/(Th4 - Th3)) in the range of the steering torque Th from (+Th3) to (+Th4) is defined as R4, for example, the rates of changes R2, R4, R3, and R1, may be set to increase in this order.

Similarly, when the rate of change (Ta5/Th5) which the change in the assist torque Ta relative to the change in the steering torque Th in the range of the steering torque Th from "0" to (-Th5) is defined as R5; the rate of change ((Ta6 - Ta5)/(Th6 - Th5)) in the range of the steering torque Th from (-Th5) to (-Th6) is defined as R6; the rate of change ((Ta7 - Ta6)/(Th7 - Th6)) in the range of the steering torque Th from (-Th6) to (-Th7) is defined as R7; and the rate of change ((Ta8 - Ta7)/(Th8 - Th7)) in the range of the steering torque Th from (-Th7) to (-Th8) is defined as R8, for example, the rates of changes R6, R8, R7, and R5 may be set to increase in this order.

Note that the magnitudes of Ta1 and Th5 may be set equal, the magnitudes of Ta2 and Th6 may be set equal, the magnitudes of Ta3 and Th7 may be set equal, and the magnitudes of Ta4 and Th8 may be set equal.

Referring to FIG. 8, the adder 71 and the absolute value calculation unit 72 calculate the absolute value |Th + Ta| of the sum of the steering torque Th and the assist torque Ta and input it to the dynamic friction coefficient setting unit 73a and the static friction coefficient setting unit 73b.

The dynamic friction coefficient setting unit 73a sets a dynamic friction coefficient Cd based on at least the absolute value |Th + Tal. For example, the dynamic friction coefficient setting unit 73a may set a larger dynamic friction coefficient Cd when the absolute value |Th + Ta| is larger than when the absolute value |Th + Ta| is smaller.

FIG. 10 is a schematic diagram of an example of the characteristic of the dynamic friction coefficient Cd set by the dynamic friction coefficient setting unit 73a. For example, the dynamic friction coefficient Cd is the value "0" when the absolute value |Th + Ta| is in the range less than the value T1, the value "1" when the absolute value |Th + Ta| is in the range equal to or more than the value T2, and increases from the value "0" to "1" when the absolute value |Th + Ta| increases from T1 to T2.

Referring to FIG. 8, the static friction coefficient setting unit 73b sets a static friction coefficient Cs based on at least the absolute value |Th + Tal. For example, the static friction coefficient setting unit 73b may set the static friction coefficient Cs using the same method as the dynamic friction coefficient setting unit 73a setting the dynamic friction coefficient Cd. If a static friction is not considered in the disturbance observer, the static friction coefficient Cs may be set to "0."

The multipliers 74a and 74b calculate a base dynamic friction torque Tdb and a base static friction torque Tsb by multiplying a predetermined base friction torque by the dynamic friction coefficient Cd and by the static friction coefficient Cs, respectively.

The friction gain calculation unit 75 calculates a friction gain Gf according to the actual steering angular velocity ωa. The friction gain Gf has the value "1" when the actual steering angular velocity ωa is positive (that is, the steering mechanism is rotating clockwise) and the actual steering angular velocity ωa is more than a predetermined value (+ω1), and has the value "-1" when the actual steering angular velocity ωa is negative (that is, the steering mechanism is rotating counterclockwise) and the actual steering angular velocity ωa is less than a predetermined negative value (-ω2). When the actual steering angular velocity ωa is the range between the predetermined value (-ω2) and the predetermined value (+ω1), the friction gain Gf increases as the actual steering angular velocity ωa increases and decreases as the actual steering angular velocity ωa decreases. Note that the magnitude (absolute value) of the predetermined value (-ω2) and the predetermined value (+ω1) may be equal to each other.

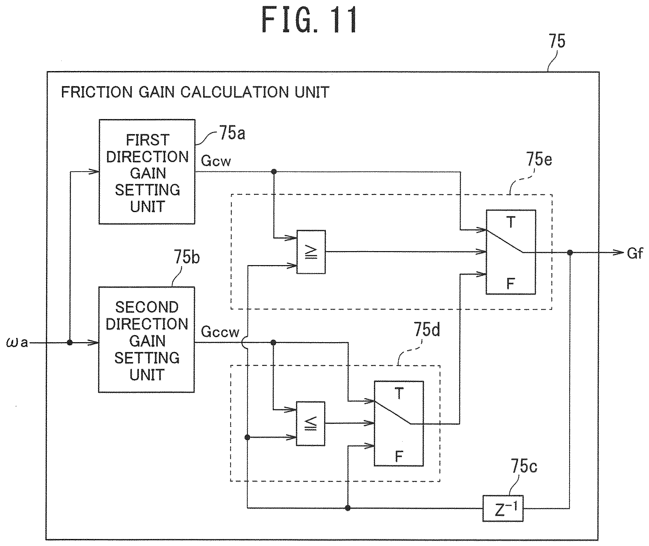

FIG. 11 is a block diagram illustrating an example of the functional configuration of the friction gain calculation unit 75. The friction gain calculation unit 75 includes a first direction gain setting unit 75a, a second direction gain setting unit 75b, a delay unit 75c, a first selector 75d, and a second selector 75e.

The first direction gain setting unit 75a and the second direction gain setting unit 75b set a first direction gain Gcw and a second direction gain Gccw according to the actual steering angular velocity ωa, respectively.

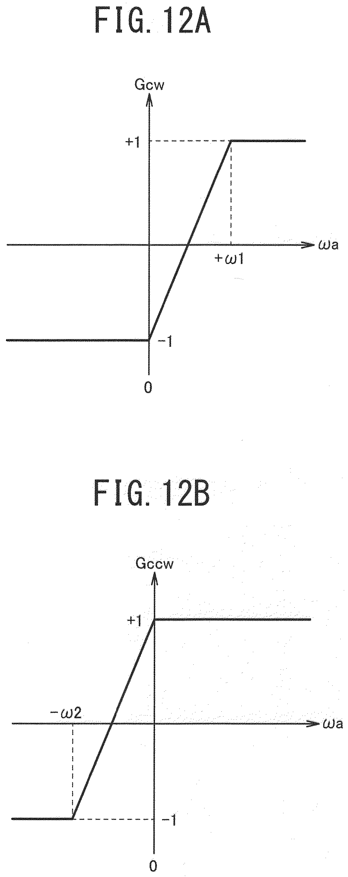

FIGS. 12A and 12B are schematic diagrams of examples of the characteristics of the first and second direction gains Gcw and Gccw, respectively.

The first direction gain Gcw is set to the value "-1" when the actual steering angular velocity ωa is equal to or less than "0", is set to the value "1" when the actual steering angular velocity ωa is equal to or more than a predetermined value (+ω1), and increases from the value "-1" to the value "1" when the actual steering angular velocity ωa is in the range from "0" to the predetermined value (+ω1).

The second direction gain Gccw is set to the value "-1" when the actual steering angular velocity ωa is equal to or lower than a predetermined value (-ω2), is set to the value "1" when the actual steering angular velocity ωa is equal to or more than 0, and increases from the value "-1" to the value "1" when the actual steering angular velocity ωa is in the range from the predetermined value (-ω2) to "0."

Referring to FIG. 11, the delay unit 75c inputs a past value (a previous value) of the friction gain Gf to the first selector 75d and the second selector 75e.

The first selector 75d outputs the second direction gain Gccw to the second selector 75e when the second direction gain Gccw is equal to or less than the past value of the friction gain Gf. The first selector 75d outputs the past value of the friction gain Gf to the second selector 75e when the second direction gain Gccw is more than the past value of the friction gain Gf.

The second selector 75e outputs the first direction gain Gcw as the friction gain Gf when the first direction gain Gcw is equal to or more than the past value of the friction gain Gf. The second selector 75e outputs the output value of the first selector 75d as the friction gain Gf when the first direction gain Gcw is less than the past value of the friction gain Gf.

This configuration provides a hysteresis characteristic to the relationship between the actual steering angular velocity ωa and the friction gain Gf, and prevents the friction gain Gf from fluctuating even when the actual steering angular velocity ωa varies near zero.

Referring to FIG. 8, the sign unit 76 outputs the value "1" to the selector 78 when the friction gain Gf is equal to or more than "0" and outputs the value "-1" when the friction gain Gf is less than "0."

The delay unit 77 outputs, to the selector 78, the past value (the previous value) of the direction gain Gd that is output from the selector 78.

The selector 78 outputs the output of the sign unit 76 as the direction gain Gd when the friction gain Gf is not "0," and maintains the value of the direction gain Gd that has been output last time (that is, the past value) when the friction gain Gf is "0."

The absolute value calculation unit 79 calculates the absolute value |Gf| of the friction gain Gf as the dynamic friction gain Gdf. The subtractor 80 calculates the difference of the dynamic friction gain Gdf subtracted from "1" as the static friction gain Gsf = (1 - Gdf).

The multipliers 81a and 81b calculate a directed basic dynamic friction torque Tdo and a directed basic static friction torque Tso by multiplying the direction gain Gd by the basic dynamic friction torque Tdb and by the basic static friction torque Tsb, respectively.

The multiplier 82a calculates a dynamic friction torque Td by multiplying the dynamic friction gain Gdf by the directed basic dynamic friction torque Tdo. The multiplier 82b calculates a static friction torque Ts by multiplying the static friction gain Gsf by the directed basic static friction torque Tso. This crossfades the static friction torque Ts and the dynamic friction torque Td based on the absolute value of the actual steering angular velocity $\omega a$ using the dynamic friction gain Gdf and the static friction gain Gsf.

The adder 83 outputs the sum (Td + Ts) of the dynamic friction torque Td and the static friction torque Ts to the multiplier 86.

On the other hand, the absolute value calculation unit 84 calculates the absolute value of the steering torque |Th|. The torque-sensitive gain setting unit 85 sets a torque-sensitive gain G4 according to the absolute value of the steering torque |Th|.

For example, the torque-sensitive gain setting unit 85 may set a larger torque-sensitive gain G4 when the absolute value of the steering torque |Th| is larger than when the absolute value of the steering torque |Th| is smaller. For example, the torque-sensitive gain setting unit 85 may set a larger torque-sensitive gain G4 for a larger absolute value |Th|.

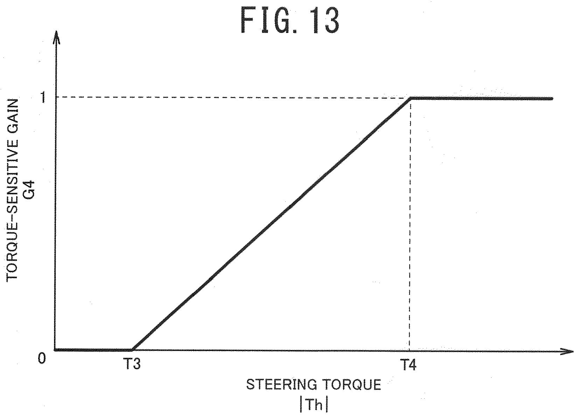

FIG. 13 is a schematic diagram of an example of the characteristic of the torque-sensitive gain G4 set by the torque-sensitive gain setting unit 85.

For example, the torque-sensitive gain G4 may be a gain that has a constant value "0" when the absolute value of the steering torque |Th| is equal to or lower than a predetermined value T3, has a constant value "1" when the absolute value |Th| is equal to or more than a predetermined value T4, and increases from "0" to "1" in the range where the absolute value |Th| is equal to or higher than the predetermined value T3 and is equal to or lower than the predetermined value T4.

Referring to FIG. 8, the multiplier 86 calculates a first friction torque Tf0 by multiplying the basic friction torque that is the sum (Td + Ts) of the dynamic friction torque Td and the static friction torque Ts by the torque-sensitive gain G4. Therefore, the first friction torque Tf0 is set to a larger value when the absolute value of the steering torque |Th| is larger than when the absolute value of the steering torque |Th| is smaller.

Referring to FIG. 5, the filter unit 42e calculates a friction torque Tf by applying low-pass filter processing to the first friction torque Tf0. The low-pass filter of the filter unit 42e may be the same as the low-pass filter of the filter unit 42c. The friction torque Tf is an example of the "friction component" as described in the claims.

The adder 42f and the subtractor 42g calculate the difference (Tia - Tie - Tf) by subtracting the estimated input torque Tie and friction torque Tf from the actual input torque Tia.

The absolute value calculation unit 42j outputs the absolute value of the steering torque Th.

The torque-sensitive gain setting unit 42k sets a torque-sensitive gain G3 according to the output of the absolute value calculation unit 42j. For example, the torque-sensitive gain setting unit 42k may set a smaller torque-sensitive gain G3 when the output of the absolute value calculation unit 42j is larger than when the output of the absolute value calculation unit 42j is smaller.

The multiplier 42l calculates the disturbance compensation torque Tob = G3 × (Tia - Tie - Tf) by multiplying the output (Tia - Tie - Tf) of the subtractor 42g by the torque-sensitive gain G3.

(Action)

(1) In the present embodiment, the friction component (the friction torque Tf) acting on the steering mechanism is considered as part of the plant model in advance to define the disturbance compensation torque Tob. In other words, the friction component is excluded from the compensation target of the disturbance observer.

The friction torque Tf is set to a larger value when the steering torque Th is larger than when the steering torque Th is smaller. Therefore, the disturbance compensation torque Tob = G3 × (Tia - Tie - Tf) includes a larger friction component Tf when the steering torque Th is larger than when the steering torque Th is smaller, and the disturbance compensation torque Tob becomes smaller when the friction component Tf is larger than when the friction component Tf is smaller.

As a result, when the steering torque Th becomes small during the execution of the steering angle control that causes the actual steering angle to follow the target steering angle, the friction component in the disturbance compensation torque Tob becomes small or the friction component disappears, so the disturbance compensation torque Tob is calculated to compensate for the friction torque actually acting on the steering mechanism as a disturbance. As a result, the disturbance compensation torque Tob becomes larger, and the steering angle tracking torque Tsfw can be increased accordingly, thus realizing highly responsive steering angle tracking.

Conversely, when the steering torque Th increases due to manual steering of a driver, the friction component in the disturbance compensation torque Tob becomes larger, so the compensation of the friction torque actually acting on the steering mechanism becomes smaller or the friction torque is uncompensated. Therefore, the disturbance compensation torque Tob becomes smaller, making the steering feel heavier. As a result, the steering reaction torque when a steering torque is input by a driver can be adjusted to achieve a subtle steering feel.

For example, assuming a situation where a driver starts steering from a state where the driver is not grasping the steering wheel or is lightly holding the steering wheel, the steering torque starts to increase as the driver starts steering, and the disturbance compensation torque Tob becomes smaller accordingly, generating a reaction force feeling.

(2) In the present embodiment, the estimated input torque Tie to the steering mechanism is calculated by inputting the actual steering angular velocity $\omega a$ into the inverse model of the steering mechanism $(J \cdot s + D)$, the actual input torque Tia that is input to the steering mechanism is calculated, and the disturbance compensation torque Tob is calculated based at least on the estimated input torque Tie and the actual input torque Tia.

The actual input torque Tia is calculated by adding the second component that includes the past value of the steering angle tracking torque Tsfw to the input torque Tah obtained by imparting a hysteresis characteristic to the sum (Tma1 + Th) of the first manual assist torque Tma1 that is the steering control value corresponding to the steering torque Th and the steering torque Th.

The phase of the actual input torque Tia with a hysteresis characteristic is delayed compared to the case where the hysteresis characteristic is not provided. Therefore, the hysteresis characteristic acts to delay the phase of the disturbance compensation torque Tob. In other words, a pseudo-friction portion acting in the direction opposite to the steering direction is subtracted from the input torque to the steering mechanism and added to the disturbance compensation torque Tob. As a result, the steering torque when a driver steers the steering mechanism can be increased (making the steering feel heavier). Furthermore, the steering feel can be adjusted by adjusting the hysteresis width Wh.

(Operation)

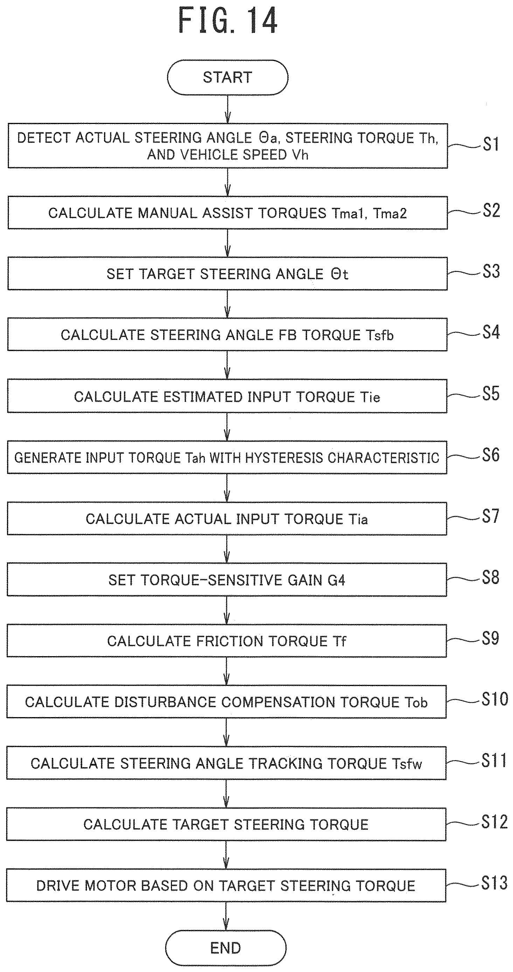

FIG. 14 is a flowchart of an example control method of the electric power steering device of the embodiment.

At step S1, the steering angle sensor 14, torque sensor 10, and vehicle speed sensor 12 detect an actual steering angle $\theta a$, steering torque Th, and vehicle speed Vh, respectively.

At step S2, the manual assist control unit 40 calculates a first manual assist torque Tma1 and a second manual assist torque Tma2.

At step S3, the controller 30 sets a target steering angle $\theta t$.

At step S4, the steering angle FB control unit 41 calculates a steering angle FB torque Tsfb.

At step S5, the input torque estimation unit 42a inputs an actual steering angular velocity $\omega a$ to the inverse model of the steering mechanism and calculates an estimated input torque Tie that is the estimate value of the input torque to the steering mechanism.

At steps S6 and S7, the actual input torque Tia that is input to the steering mechanism is calculated based on at least the steering torque Th, the vehicle speed Vh, the past value (previous value) of the steering angle tracking torque Tsfw, the first manual assist torque Tma1 and the second manual assist torque Tma2.

First, at step S6, the input torque calculation unit 42b generates an input torque Tah by imparting a hysteresis characteristic to the static manual steering input torque (Tma1 + Th) that is the sum of the first manual assist torque Tma1 and steering torque Th.

At step S7, the input torque calculation unit 42b calculates a basic actual input torque Tia0 by adding the difference (Tma2 - Tma1) between the second manual assist torque Tma2 and the first manual assist torque Tma1 and the past value of the steering angle tracking torque Tsfw to the input torque Tah. The filter unit 42c calculates the actual input torque Tia by applying low-pass filter processing to the basic actual input torque Tia0.

At step S8, the friction torque estimation unit 42d sets a torque-sensitive gain G4 according to the absolute value of the steering torque |Th|.

At step S9, the friction torque estimation unit 42d calculates a first friction torque Tf0 by multiplying the basic friction torque corresponding to the steering angular velocity $\omega a$ by the torque-sensitive gain G4. The filter unit 42e calculates a friction torque Tf by applying low-pass filter processing to the first friction torque Tf0. This results in the calculation of a larger friction torque Tf when the absolute value of the steering torque |Th| is larger than when the absolute value of the steering torque |Th| is smaller.

At step S10, the disturbance compensation torque setting unit 42 calculates a disturbance compensation torque Tob = G3 × (Tia - Tie - Tf).

At step S11, the adder 43 and multiplier 45 multiply the sum of the steering angle FB torque Tsfb and the disturbance compensation torque Tob by the operating gain Gop to calculate the steering angle tracking torque Tsfw = Gop × (Tsfb + Tob).

At step S12, the adder 46 calculates a target steering torque (Tma2 + Tsfw) by adding the second manual assist torque Tma2 and the steering angle tracking torque Tsfw.

At step S13, the command value setting unit 47, current FB control unit 48, PWM control unit 49 and inverter 50 drive the motor 20 based on the target steering torque (Tma2 + Tsfw). The processing is then terminated.

Reference Signs List

1 Steering wheel
2 Steering shaft
3 Reduction gear
4a, 4b Universal joint
5 Pinion rack mechanism
5a Pinion
5b Rack
6a, 6b Tie rod
7a, 7b Hub unit
8L, 8R Steered wheel
10 Torque sensor
11 Ignition key
12 Vehicle speed sensor
13 Battery
14 Steering angle sensor
20 Motor
30 Controller
40 Manual assist control unit
40a Approximate differentiation unit
40b Gain multiplication unit
40c Assist torque setting unit
40d, 42c, 42e Filter unit
40e, 42f, 43, 46, 60, 64, 65, 71, 83 Adder
41 Steering angle feedback control unit
41a Target steering angular velocity calculation unit
41b Steering angular velocity feedback calculation unit
61 Hysteresis width setting unit
62 Hysteresis processing unit
41e, 42j, 72, 79, 84 Absolute value calculation unit (abs)
41f, 42k, 85 Torque-sensitive gain setting unit
41g, 42l, 45, 74a, 74b, 81a, 81b, 82a, 82b, 86 Multiplier
42 Disturbance compensation torque setting unit
42a Input torque estimation unit
42b Input torque calculation unit
42d Friction torque estimation unit
42g, 63, 80 Subtractor
44 Operation setting unit
47 Command value setting unit
48 Current feedback control unit
49 PWM control unit
50 Inverter
51 Current detection unit

70 Assist torque setting unit
73a Dynamic friction coefficient setting unit
73b Static friction coefficient setting unit
75 Friction gain calculation unit
75a First direction gain setting unit
75b Second direction gain setting unit
75c, 77 Delay unit
75d First selector
75e Second selector
76 Sign unit (sgn)
78 Selector

## Claims

1. A control device for an electric power steering device including:

   a steering torque detection unit (10) configured to detect a steering torque that is input to a steering mechanism (5);
   a first steering control value calculation unit (40) configured to calculate a first steering control value (Tma2) based on the steering torque detected by the steering torque detection unit (10);
   a second steering control value calculation unit (45) configured to calculate a second steering control value (Tsfw) for causing an actual steering angle ($\theta$a) to follow a target steering angle ($\theta$t);
   a mixing unit (46) configured to calculate a target steering control value by adding the first steering control value (Tma2) and the second steering control value (Tsfw); and
   a drive unit (50) configured to drive a motor (20) generating a steering force based on the target steering control value,
   wherein the second steering control value calculation unit (45) includes a disturbance compensation torque setting unit (42) configured to set a disturbance compensation torque, and calculates the second steering control value (Tsfw) based on an angular deviation of the actual steering angle ($\theta$a) relative to the target steering angle ($\theta$t) and the disturbance compensation torque,
   wherein the disturbance compensation torque setting unit (42) sets the disturbance compensation torque including a larger friction component when the steering torque is larger than when the steering torque is smaller,
   wherein the disturbance compensation torque setting unit (42) includes:

      an input torque estimation unit (42a) configured to calculate an estimate value of an input torque to the steering mechanism (5) by inputting angle information of the steering mechanism (5) into an inverse model of the steering mechanism (5); and
      an input torque calculation unit (42b) configured to calculate the input torque that is input to the steering mechanism (5),
      wherein the disturbance compensation torque setting unit (42) calculates the disturbance compensation torque based on the estimate value calculated by the input torque estimation unit (42a), the input torque calculated by the input torque calculation unit (42b), and the friction component,

   wherein the disturbance compensation torque setting unit (42) includes:

      the input torque estimation unit (42a) configured to calculate an estimate value of an input torque to the steering mechanism (5) by inputting angle information of the steering mechanism (5) into an inverse model of the steering mechanism (5); and
      the input torque calculation unit (42b) configured to calculate the input torque that is input to the steering mechanism (5),
      wherein the disturbance compensation torque setting unit (42) calculates the disturbance compensation torque based at least on the estimate value calculated by the input torque estimation unit (42a) and the input torque calculated by the input torque calculation unit (42b),
      wherein the input torque calculation unit (42b) calculates the input torque by adding a first component obtained by imparting a hysteresis characteristic to a sum of the steering control value corresponding to the steering torque detected by the steering torque detection unit (10) and the steering torque to a second component including a past value of the second steering control value (Tsfw),

wherein the input torque calculation unit (42b) sets a hysteresis width of the first component according to a vehicle speed, and

wherein the input torque calculation unit (42b) sets a wider hysteresis width when the vehicle speed is higher than when the vehicle speed is lower.

2. The control device according to claim 1, wherein the disturbance compensation torque setting unit (42) calculates the friction component by multiplying a basic friction torque corresponding to a steering angular velocity of the steering mechanism (5) by a gain corresponding to the steering torque.

3. The control device according to claim 1, wherein the input torque calculation unit (42b) calculates the input torque by adding a first component obtained by imparting a hysteresis characteristic to a sum of a steering control value corresponding to the steering torque detected by the steering torque detection unit (10) and the steering torque to a second component including a past value of the second steering control value (Tsfw).

4. The control device according to claim 1, wherein the input torque calculation unit (42b) calculates the first component by imparting a hysteresis characteristic to a sum of a static component (Tma1) of the first steering control value (Tma2) and the steering torque, and

calculates the second component by adding a component obtained by subtracting the static component from the first steering control value (Tma2) to a past value of the second steering control value (Tsfw).

5. An electric power steering device including the control device according to any one of claims 1 to 4 and a motor (20), wherein

the electric power steering device controls, by the control device, steering force generated by the motor (20).

**Patentansprüche**

1. Steuereinrichtung für eine elektrische Servolenkungseinrichtung, umfassend:

eine Lenkmomenterfassungseinheit (10), die dazu eingerichtet ist, ein in einen Lenkmechanismus (5) eingebrachtes Lenkmoment zu erfassen;
eine erste Lenksteuerwertberechnungseinheit (40), die dazu eingerichtet ist, einen ersten Lenksteuerwert (Tma2) basierend auf dem von der Lenkmomenterfassungseinheit (10) erfassten Lenkmoment zu berechnen;
eine zweite Lenksteuerwert-Berechnungseinheit (45), die dazu eingerichtet ist, einen zweiten Lenksteuerwert (Tsfw) zu berechnen, um einen Ist-Lenkwinkel (θa) zu veranlassen, einem Soll-Lenkwinkel (θt) zu folgen;
eine Mischeinheit (46), die dazu eingerichtet ist, einen Soll-Lenksteuerwert durch Addition des ersten Lenksteuerwerts (Tma2) und des zweiten Lenksteuerwerts (Tsfw); zu berechnen, und
eine Antriebseinheit (50), die dazu eingerichtet ist, einen Motor (20) anzutreiben, welcher eine Lenkkraft basierend auf dem Soll-Lenksteuerwert erzeugt;
wobei die zweite Lenksteuerwert-Berechnungseinheit (45) eine Störungskompensationsmoment-Einstelleinheit (42) umfasst, die dazu eingerichtet ist, ein Störungskompensationsmoment einzustellen und den zweiten Lenksteuerwert (Tsfw) basierend auf einer Winkelabweichung des Ist-Lenkwinkels (θa) relativ zum Soll-Lenkwinkel (θt) und dem Störungskompensationsmoment zu berechnen,
wobei die Störungskompensationsmoment-Einstelleinheit (42) das Störungskompensationsmoment, welches eine größeren Reibungskomponente enthält, einstellt, wenn das Lenkmoment größer ist als wenn das Lenkmoment kleiner ist,
wobei die Störungskompensationsmoment-Einstelleinheit (42) umfasst:

eine Eingangsmoment-Schätzeinheit (42a), die dazu eingerichtet ist, einen Schätzwert des Eingangsmoments des Lenkmechanismus (5) zu berechnen, indem sie Winkelinformation des Lenkmechanismus (5) in ein inverses Modell des Lenkmechanismus (5) eingibt, und
eine Eingangsmoment-Berechnungseinheit (42b), die dazu eingerichtet ist, das in den Lenkmechanismus (5) eingegebene Eingangsmoment zu berechnen,
wobei die Störungskompensationsmoment-Einstelleinheit (42) das Störungskompensationsmoment basierend auf dem von der Eingangsmomentschätzeinheit (42a) berechneten Schätzwert, dem von der Eingangsmomentberechnungseinheit (42b) berechneten Eingangsmoment und der Reibungskomponente berechnet,
wobei die Störungskompensationsmoment-Einstelleinheit (42) umfasst:

die Eingangsmomentschätzeinheit (42a), die dazu eingerichtet ist, einen Schätzwert eines Eingangsmoments für den Lenkmechanismus (5) zu berechnen, indem sie Winkelinformation des Lenkmechanismus (5) in ein inverses Modell des Lenkmechanismus (5) eingibt; und

die Eingangsmoment-Berechnungseinheit (42b), die dazu eingerichtet ist, das in den Lenkmechanismus (5) eingegebene Eingangsmoment zu berechnen,

wobei die Störungskompensationsmoment-Einstelleinheit (42) das Störungskompensationsmoment zumindest basierend auf dem von der Eingangsmoment-Schätzeinheit (42a) berechneten Schätzwert und dem von der Eingangsmoment-Berechnungseinheit (42b) berechneten Eingangsmoment berechnet,

wobei die Eingangsmoment-Berechnungseinheit (42b) das Eingangsmoment durch Addition einer ersten Komponente berechnet, die durch Berücksichtigung einer Hysteresecharakteristik zu einer Summe aus dem Lenksteuerwert, der dem von der Lenkmoment-Erfassungseinheit (10) erfassten Lenkmoment entspricht, und dem Lenkmoment zu einer zweiten Komponente, die einen früheren Wert des zweiten Lenksteuerwerts (Tsfw) enthält, erhalten wird,

wobei die Eingangsmoment-Berechnungseinheit (42b) die Hysteresebreite der ersten Komponente in Abhängigkeit von der Fahrzeuggeschwindigkeit einstellt, und

wobei die Eingangsmoment-Berechnungseinheit (42b) eine größere Hysteresebreite einstellt, wenn die Fahrzeuggeschwindigkeit höher ist als wenn die Fahrzeuggeschwindigkeit niedriger ist.

2. Steuereinrichtung nach Anspruch 1, wobei die Störungskompensationsmoment-Einstelleinheit (42) die Reibungskomponente durch Multiplikation eines der Lenkwinkelgeschwindigkeit des Lenkmechanismus (5) entsprechenden Basisreibungsmoments mit einer dem Lenkmoment entsprechenden Verstärkung berechnet.

3. Steuereinrichtung nach Anspruch 1, wobei die Eingangsmoment-Berechnungseinheit (42b) das Eingangsmoment berechnet, indem sie eine erste Komponente, die durch Berücksichtigung einer Hysteresekennlinie erhalten wird, zu einer Summe aus einem Lenksteuerwert, der dem von der Lenkmomenterfassungseinheit (10) erfassten Lenkmoment entspricht, und dem Lenkmoment zu einer zweiten Komponente addiert, die einen früheren Wert des zweiten Lenksteuerwerts (Tsfw) enthält.

4. Steuereinrichtung nach Anspruch 1, wobei die Eingangsmoment-Berechnungseinheit (42b) die erste Komponente berechnet, indem sie der Summe aus der statischen Komponente (Tma1) des ersten Lenksteuerwerts (Tma2) und dem Lenkmoment eine Hysterese-Charakteristik zuweist, und die zweite Komponente berechnet, indem sie die durch Subtraktion der statischen Komponente vom ersten Lenksteuerwert (Tma2) erhaltene Komponente zu einem früheren Wert des zweiten Lenksteuerwerts (Tsfw) addiert.

5. Elektrische Servolenkungseinrichtung, enthaltend die Steuereinrichtung nach einem der Ansprüche 1 bis 4 und einen Motor (20), wobei die elektrische Servolenkungseinrichtung die vom Motor (20) erzeugte Lenkkraft über die Steuereinrichtung steuert.

**Revendications**

1. Dispositif de commande pour un dispositif de direction assistée électrique comprenant :

une unité de détection de couple de direction (10) configurée pour détecter un couple de direction qui est appliqué à un mécanisme de direction (5) ;

une première unité de calcul de valeur de commande de direction (40) configurée pour calculer une première valeur de commande de direction (Tma2) sur la base du couple de direction détecté par l'unité de détection de couple de direction (10) ;

une deuxième unité de calcul de valeur de commande de direction (45) configurée pour calculer une deuxième valeur de commande de direction (Tsfw) afin d'amener un angle de direction réel (θa) à suivre un angle de direction cible (θt) ;

une unité de mélange (46) configurée pour calculer une valeur de commande de direction cible en ajoutant la première valeur de commande de direction (Tma2) et la deuxième valeur de commande de direction (Tsfw) ; et

une unité d'entraînement (50) configurée pour entraîner un moteur (20) générant une force de direction sur la base de la valeur de commande de direction cible,

dans lequel la deuxième unité de calcul de valeur de commande de direction (45) comprend une unité de réglage du couple de compensation de perturbation (42) configurée pour régler un couple de compensation de perturbation, et calcule la deuxième valeur de commande de direction (Tsfw) sur la base d'un écart angulaire de l'angle de direction réel ($\theta$a) par rapport à l'angle de direction cible ($\theta$t) et du couple de compensation de perturbation,

dans lequel l'unité de réglage du couple de compensation de perturbation (42) règle le couple de compensation de perturbation en incluant une composante de friction plus importante lorsque le couple de direction est plus important que lorsque le couple de direction est plus faible,

dans lequel l'unité de réglage du couple de compensation de perturbation (42) comprend :

une unité d'estimation du couple d'entrée (42a) configurée pour calculer une valeur estimée d'un couple d'entrée vers le mécanisme de direction (5) en entrant des informations d'angle du mécanisme de direction (5) dans un modèle inverse du mécanisme de direction (5) ; et

une unité de calcul de couple d'entrée (42b) configurée pour calculer le couple d'entrée qui est entré dans le mécanisme de direction (5),

dans lequel l'unité de réglage du couple de compensation de perturbation (42) calcule le couple de compensation de perturbation sur la base de la valeur estimée calculée par l'unité d'estimation du couple d'entrée (42a), du couple d'entrée calculé par l'unité de calcul du couple d'entrée (42b), et de la composante de frottement,

dans lequel l'unité de réglage du couple de compensation de perturbation (42) comprend :

l'unité d'estimation du couple d'entrée (42a) configurée pour calculer une valeur estimée d'un couple d'entrée vers le mécanisme de direction (5) en entrant des informations d'angle du mécanisme de direction (5) dans un modèle inverse du mécanisme de direction (5) ; et

l'unité de calcul du couple d'entrée (42b) configurée pour calculer le couple d'entrée qui est entré dans le mécanisme de direction (5),

dans lequel l'unité de réglage du couple de compensation de perturbation (42) calcule le couple de compensation de perturbation sur la base au moins de la valeur estimée calculée par l'unité d'estimation du couple d'entrée (42a) et du couple d'entrée calculé par l'unité de calcul du couple d'entrée (42b),

dans lequel l'unité de calcul du couple d'entrée (42b) calcule le couple d'entrée en ajoutant une première composante obtenue en conférant une caractéristique d'hystérésis à une somme de la valeur de commande de direction correspondant au couple de direction détecté par l'unité de détection du couple de direction (10) et du couple de direction à une deuxième composante comprenant une valeur passée de la deuxième valeur de commande de direction (Tsfw),

dans lequel l'unité de calcul du couple d'entrée (42b) définit une largeur d'hystérésis de la première composante en fonction d'une vitesse de véhicule, et

dans lequel l'unité de calcul du couple d'entrée (42b) définit une largeur d'hystérésis plus importante lorsque la vitesse de véhicule est plus élevée que lorsque la vitesse du véhicule est plus faible.

2. Dispositif de commande selon la revendication 1, dans lequel l'unité de réglage du couple de compensation de perturbation (42) calcule la composante de frottement en multipliant un couple de frottement de base correspondant à une vitesse angulaire de direction du mécanisme de direction (5) par un gain correspondant au couple de direction.

3. Dispositif de commande selon la revendication 1, dans lequel l'unité de calcul du couple d'entrée (42b) calcule le couple d'entrée en ajoutant une première composante obtenue en conférant une caractéristique d'hystérésis à une somme d'une valeur de commande de direction correspondant au couple de direction détecté par l'unité de détection de couple de direction (10) et du couple de direction à une deuxième composante comprenant une valeur passée de la deuxième valeur de commande de direction (Tsfw).

4. Dispositif de commande selon la revendication 1, dans lequel l'unité de calcul du couple d'entrée (42b) calcule la première composante en conférant une caractéristique d'hystérésis à une somme d'une composante statique (Tma1) de la première valeur de commande de direction (Tma2) et du couple de direction, et calcule la deuxième composante en ajoutant une composante obtenue en soustrayant la composante statique de la première valeur de commande de direction (Tma2) à une valeur passée de la deuxième valeur de commande de direction (Tsfw).

5. Dispositif de direction assistée électrique comprenant le dispositif de commande selon l'une quelconque des revendications 1 à 4 et un moteur (20), dans lequel le dispositif de direction assistée électrique contrôle, à l'aide du dispositif de commande, la force de direction générée par le moteur (20).

# FIG. 1

# FIG. 2

EP 4 474 250 B1

# FIG. 3

40

**MANUAL ASSIST CONTROL UNIT**

Th ——→ APPROXIMATE DIFFERENTIATION UNIT (40a) —ΔTh→ ▷ (40b) —G1×ΔTh→ ⊕ (40e) ——→ Tma2

Vh ——→ ASSIST TORQUE SETTING UNIT (40c) —Tma→ FILTER UNIT (40d) ——→ Tma1

# FIG. 4

41

**STEERING ANGLE FB CONTROL UNIT**

Th ——→ abs (41e) ——→ TORQUE-SENSITIVE GAIN SETTING UNIT (41f) G2

Vh ——→ 
θa ——→ TARGET STEERING ANGULAR VELOCITY CALCULATION UNIT (41a) —ωt / Kpp→ STEERING ANGULAR VELOCITY FB CALCULATION UNIT (41b) —Tsfb0→ ⊗ (41g) ——→ Tsfb
θt ——→ 
ωa ——→

# FIG. 5

# FIG. 6

# FIG. 7

## FIG. 8

EP 4 474 250 B1

# FIG. 9

ASSIST TORQUE
Ta

+Ta4

+Ta3

+Ta2

+Ta1

−Th8    −Th7 −Th6    −Th5

STEERING
TORQUE
Th

+Th1  +Th2 +Th3            +Th4

−Ta5

−Ta6

−Ta7

−Ta8

# FIG. 10

DYNAMIC FRICTION COEFFICIENT
Cd

1

0      T1                          T2

|Th+Ta|

# FIG. 11

# FIG. 12A

# FIG. 12B

# FIG. 13

TORQUE-SENSITIVE GAIN G4 vs STEERING TORQUE |Th|, with points T3 and T4 on the horizontal axis and value 1 on the vertical axis.

# FIG. 14

START

DETECT ACTUAL STEERING ANGLE Θa, STEERING TORQUE Th, AND VEHICLE SPEED Vh — S1

CALCULATE MANUAL ASSIST TORQUES Tma1, Tma2 — S2

SET TARGET STEERING ANGLE Θt — S3

CALCULATE STEERING ANGLE FB TORQUE Tsfb — S4

CALCULATE ESTIMATED INPUT TORQUE Tie — S5

GENERATE INPUT TORQUE Tah WITH HYSTERESIS CHARACTERISTIC — S6

CALCULATE ACTUAL INPUT TORQUE Tia — S7

SET TORQUE-SENSITIVE GAIN G4 — S8

CALCULATE FRICTION TORQUE Tf — S9

CALCULATE DISTURBANCE COMPENSATION TORQUE Tob — S10

CALCULATE STEERING ANGLE TRACKING TORQUE Tsfw — S11

CALCULATE TARGET STEERING TORQUE — S12

DRIVE MOTOR BASED ON TARGET STEERING TORQUE — S13

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008068677 A

- EP 3744611 B1